# EUROPEAN PATENT APPLICATION

(11) **EP 2 509 192 A2**
(43) Date of publication of application: **10.10.2012**
(21) Application number: 12161936.5
(22) Date of filing: 29.03.2012
(51) Int. Cl.: H02K 1/14, H02K 15/03, D06F 37/30

(54) **Motor and magnetizing apparatus and magnetizing method of motor**

(30) Priority: 08.04.2011 KR 20110032736; 08.09.2011 KR 20110091005
(71) Applicant: Samsung Electronics Co., Ltd., Suwon-si, Gyeonggi-do, 443-742 (KR)
(72) Inventor: Lee, Sung Gu, Gyeonggi-do (KR); Kim, Young Kwan, Gyeonggi-Do (KR); Yoon, Keun Young, Gyeonggi-do (KR)
(74) Representative: Grünecker, Kinkeldey, Stockmair & Schwanhäusser

(57) **Abstract**

An apparatus for magnetizing magnets provided among a plurality of cores of a motor of a washing machine and a method thereof, is capable of fully magnetizing a magnet forming a rotor and including a plurality of teeth disposed around two cores of the plurality of cores, the two cores being laterally provided while interposing one of the magnets therebetween, and a coil being provided around the plurality of teeth to form a magnetic flux to magnetize the one magnet interposed between the two cores laterally provided.

## Description

### BACKGROUND

### 1. Field

Embodiments of the present disclosure relate to a motor, and more particularly, to a rotor forming a motor to drive various apparatuses, an apparatus for magnetizing a rotor and a magnetizing method thereof.

### 2. Description of the Related Art

A flux concentrated motor is configured to increase a torque generated per a volume by concentrating a magnetic flux and includes a stator and a rotor. The rotor includes rotor cores, which are disposed at an inner side or an outer side of the stator in a circumferential direction of the rotor while being separated from each other to rotate with electromagnetic interaction, and a permanent magnet (hereinafter, referred to as a 'magnet') coupled to an area between the rotor cores.

There are two ways to assemble a magnet to a rotor core. The first way is referred to a pre-magnetization in which a magnet is magnetized first and then the magnetized magnet is assembled to an area between rotor cores. The second way is referred to a post-magnetization in which an un-magnetized magnet is assembled to an area between rotor cores and then is subject to magnetization. Pre-magnetization is an easy method to achieve magnetization. However, pre-magnetization makes assembling more difficult due to attractive force and repulsive force between magnets and may damage nearby equipment. Accordingly, the use of the post-magnetization is increasing.

Meanwhile, post-magnetization has an advantage of easily assembling a magnet. However, according to post-magnetization, a magnet needs to be magnetized while being assembled between rotor cores, making it more difficult to equally magnetizing the magnet. Accordingly, there is a need for a structure of a rotor enabling a magnet to be equally magnetized and a magnetizing apparatus thereof.

### SUMMARY

Therefore, it is an aspect of the present disclosure to provide a motor, a magnetizing apparatus for a motor and a magnetizing method thereof, capable of fully magnetizing a magnet forming a rotor.

Additional aspects of the disclosure will be set forth in part in the description which follows and, in part, will be obvious from the description, or may be learned by practice of the disclosure.

In accordance with one aspect of the present disclosure, an apparatus for magnetizing magnets provided among a plurality of cores that are radially disposed may include a plurality of teeth and a coil. The teeth may be disposed around two cores of the plurality of cores, and the two cores may be laterally provided while interposing one of the magnets therebetween. The coil may be provided around the plurality of teeth to form a magnetic flux to magnetize the one magnet interposed between the two cores laterally provided.

The plurality of teeth may comprise two main teeth and coils. The two main teeth may extend from a body of the magnetizing apparatus toward a center, to which the plurality of cores may be directed, and may be disposed to be adjacent to outer circumferences of the two cores, respectively. The coils may be wound around the two main teeth, respectively, and electric current may flow in opposite directions, respectively.

The two main teeth may be disposed to be adjacent to the outer circumference of the two cores, respectively, to form a closed-loop path of the magnetic flux in cooperation with the two cores and the magnet disposed between the two cores.

The plurality of teeth may further comprise subsidiary teeth provided on outer sides of the two main teeth to prevent a magnetic influence from being applied to other magnets disposed on both sides of the one magnet, which may be disposed between the two cores.

The subsidiary tooth may be disposed to be adjacent to an outer circumference of another core disposed on a respective outer side of the two cores to form a closed-loop path of the magnetic flux in cooperation with the other core.

An interval between the two main teeth may be identical to an interval between the main tooth and the subsidiary tooth.

The magnetizing apparatus may further include a connection part configured to connect at least two magnetizing apparatuses to each other such that the at least two magnetizing apparatuses are disposed on an outer side of the rotor in a form of a ring.

The connection part may be integrally formed with the body.

Adjacent magnetizing apparatuses of the at least two magnetizing apparatuses may share the subsidiary teeth.

The plurality of teeth may comprise two main teeth, a winding part and a coil. The two main teeth may be adjacent to upper surfaces of the two cores, respectively, or on lower surfaces of the two cores, respectively. The winding part may be configured to connect the two main teeth to each other. The coil may be wound on the winding part.

The magnet may include ferrite.

The magnet may include rare earth metal.

The magnetizing apparatus may further include a cooling water port provided on one side of the body and a cooling water passage that communicates with the cooling water port and passes through inside the body.

The magnetizing apparatus may further include a winding part and a coil wound around the winding part. The winding part may be provided on the body such that a magnetic flux is formed at the magnet in a direction identical to a direction of a magnetic flux formed when an electric current flows through a coil wound around the main teeth.

In accordance with another aspect of the present disclosure, an apparatus for magnetizing magnets of a rotor, which may be disposed on an inner side of a stator installed on a tub of a washing machine and may comprise a plurality of cores radially disposed and the magnets provided among the plurality of cores, may include magnetizing teeth and a coil. The magnetizing teeth may be disposed around a first core and a second core of the plurality of cores, the first core and the second core may be laterally provided while interposing one of the magnets therebetween. The coil may be provided around the magnetizing teeth to form a magnetic flux to magnetize the one magnet interposed between the first core and the second core.

The magnetizing teeth may include a first magnetizing tooth and a second magnetizing tooth. The first magnetizing tooth may extend from a body of the magnetizing apparatus while facing the first core to be adjacent to an outer circumferential surface of the first core. The second magnetizing tooth may extend from the body of the magnetizing apparatus while facing the second core to be adjacent to an outer circumferential surface of the second core.

The magnetizing apparatus may further include coils which are wound around the first magnetizing tooth and the second magnetizing tooth, respectively, and flow electric current in opposite directions, respectively.

The magnetizing apparatus may further include a subsidiary tooth provided on an outer side of the first magnetizing tooth or the second magnetizing tooth. The subsidiary tooth may be disposed to be adjacent to an outer circumferential surface of another core disposed on an outer side of the first core or the second core.

The subsidiary tooth may form a closed-loop path of the magnetic flux in cooperation with the other core disposed on the outer side of the first core or the second core to prevent a magnetic influence from being applied to other magnets disposed on both sides of the one magnet disposed between the first core and the second core.

The magnetizing apparatus may further include a connection part configured to connect at least two magnetizing apparatuses to each other such that the at least two magnetizing apparatuses are disposed on an outer side of the rotor in a form of a ring.

The connection part may be integrally formed with the body.

Adjacent magnetizing apparatuses of the at least two magnetizing apparatuses may share the subsidiary teeth.

The magnetizing teeth may comprise a first magnetizing tooth, a second magnetizing tooth, a winding part and a coil wound on the winding part. The first magnetizing tooth and the second magnetizing tooth may be disposed to be adjacent to upper surfaces of the first core and the second core, respectively, or on lower surfaces of the first core and the second core, respectively. The winding part may be configured to connect the first magnetizing tooth to the second magnetizing tooth.

The magnetizing apparatus may further a winding part and a coil wound around the winding part. The winding part may be provided on the body such that a magnetic flux may be formed at the magnet in a direction identical to a direction of a magnetic flux formed when an electric current flows through a coil wound around the main teeth.

In accordance with another aspect of the present disclosure, a method of magnetizing magnets of a rotor, which may comprise a plurality of cores that are radially disposed while interposing the magnets therebetween, may be as follows.

A magnetizing apparatus may be prepared. The magnetizing apparatus may include a plurality of magnetizing teeth and coils wound around the plurality of magnetizing teeth. The magnetizing apparatus may be disposed such that the plurality of magnetizing teeth are disposed to be adjacent to outer circumferential surface of each two cores of the plurality of cores, respectively, the each two cores disposed laterally while interposing one of the magnets therebetween. Electric current may be allowed to flow through the coil such that a closed-loop path of a magnetic flux may be formed among the plurality of magnetizing teeth, the two cores and the one magnet provided between the two cores.

The plurality of magnetizing teeth may be disposed to be adjacent to outer circumferential surfaces of the each two cores.

The plurality of magnetizing teeth may be disposed to be adjacent to upper surfaces of the each two cores or on lower surfaces of the each two cores.

The magnet or the magnetizing apparatus may move in relation to each other such that the magnets are magnetized one by one.

At least two magnetizing apparatuses may be provided such that at least two of the magnets may be simultaneously magnetized.

In accordance with another aspect of the present disclosure, a rotor, which may include a plurality of cores radially disposed and a plurality of magnets disposed among the plurality of cores, may include a magnetic flux inlet and a magnetic flux outlet. The magnetic flux inlet may be configured to receive a magnetic flux, which may be formed on the magnets disposed on both sides of the core. The magnetic flux outlet may be connected to an upper portion of the magnetic flux inlet to discharge the magnetic flux which is received through the magnetic flux inlet. A ratio between a width of the upper portion of the magnetic flux inlet and a height of the magnet may be 0.5 or above and 2.7 or below such that the magnet disposed between the cores is uniformly magnetized during a process of magnetizing the magnet.

The plurality of magnets may include a first magnet and a second magnet which are disposed on both sides of one core of the plurality of cores and form opposite directions of magnetic flux flows that are directed toward the one core.

The magnetic flux flows coming out of the first magnet and the second magnet may be introduced to the magnetic flux inlet, may be combined and then may be discharged through the magnetic flux outlet to outside the core.

The magnetic flux inlet may have a width getting larger from a lower portion thereof and the upper portion in a circumference direction of the rotor, the upper portion being farther from a center of the rotor than the lower portion.

A ratio between a width of the upper portion of the magnetic flux inlet and a width of the lower portion of the magnetic flux inlet may be 1.5 or above and 3 or below.

A ratio between a width of the magnet and the width of the upper portion of the magnetic flux inlet may be 0.5 or above and 2 or below.

In accordance with another aspect of the present disclosure, a motor may include a stator, which may comprise a stator body, a plurality of stator cores extending from an inner circumferential surface of the stator core toward a center of the stator and a coil wound the stator core and connected to an external power source such that electric current flows through the coil, and a rotor, which may be rotatably disposed on an inner side of the stator and may comprise a plurality of cores and a plurality of magnets, in which the core and the magnet may be alternately disposed. The core may include a magnetic flux inlet configured to receive a magnetic flux formed at the magnet and a magnetic flux outlet configured to discharge the magnetic flux introduced through the magnetic flux inlet, and a first corner and a second corner formed at a connection portion between the magnetic flux inlet and the magnetic flux outlet. A ratio between a height of the magnet and a distance between the first corner and the second corner may be 0.5 or above and 2.7 or below.

A position of the magnet along a circumferential direction of the rotor may be determined by the magnetic flux inlet, and a position of the magnet along a radial direction of the rotor may be determined by the magnetic flux outlet.

A ratio between a width of the magnet and the distance between the first corner and the second core may be 0.5 or above and 2 or below.

In accordance with another aspect of the present disclosure, a motor of a washing machine may include a stator, which may be mounted on a tub of the washing machine, and a rotor, which may be disposed on an inner side of the stator and may comprise a plurality of cores radially disposed and a plurality of magnets disposed among the plurality of cores. The core may include a magnetic flux inlet configured to receive a magnetic flux formed at the magnet; a magnetic flux outlet configured to discharge the magnetic flux introduced through the magnetic flux inlet and a first corner and a second corner which may be formed at a connection portion between the magnetic flux inlet and the magnetic flux outlet. A ratio between a height of the magnet and a distance between the first corner and the second corner may be 0.5 or above and 2.7 or below.

As described above, a motor having an improved performance is provided.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view illustrating a washing machine according to a first embodiment of the present disclosure.
FIG. 2 is a plan view illustrating a stator and a rotor of a flux concentrated motor that is mounted on the washing machine according to a first embodiment of the present disclosure.
FIG. 3 is a perspective view illustrating a magnetizing apparatus according to a first embodiment of the present disclosure.
FIG. 4 is a view showing a concept of magnetizing a magnet of a rotor by use of the magnetizing apparatus according to a first embodiment of the present disclosure.
FIGS. 5 to 7 are sectional views illustrating a process of simultaneously magnetizing magnets of a rotor by use of a plurality of magnetizing apparatuses according to a first embodiment of the present disclosure.
FIG. 8 is a perspective view illustrating a magnetizing apparatus according to a second embodiment of the present disclosure.
FIG. 9 is a view showing a concept of magnetizing a magnet of a rotor by use of the magnetizing apparatus according to a second embodiment of the present disclosure.
FIG. 10 is a perspective view illustrating a process of simultaneously magnetizing magnets of a rotor by use of a plurality of magnetizing apparatuses according to a second embodiment of the present disclosure.
FIG. 11 is a perspective view illustrating a magnetizing apparatus according to a third embodiment of the present disclosure.
FIG. 12 is a view showing a concept of magnetizing a magnet of a rotor by use of the magnetizing apparatus according to a third embodiment of the present disclosure.
FIG. 13 is a sectional view illustrating a process of simultaneously magnetizing magnets of a rotor by use of a plurality of magnetizing apparatuses according to a third embodiment of the present disclosure.
FIG. 14 is a view illustrating a post-magnetization scheme in which a magnet is assembled to a rotor core forming a rotor according to a first embodiment of the present disclosure.
FIG. 15 is an enlarged view of a part of FIG. 14 showing a magnetic flux path in a state in which magnets have been magnetized.
FIG. 16 is an enlarged view of a part of FIG. 4 showing a magnetic flux path formed between a magnet and a magnetizing apparatus during magnetization of the magnet.
FIGS. 17A to 17D are views illustrating an area of a magnet which is magnetized according to the aspect ratio of a rotor core.

### DETAILED DESCRIPTION

Reference will now be made in detail to embodiments of the present disclosure, examples of which are illustrated in the accompanying drawings, wherein like reference numerals refer to like elements throughout.

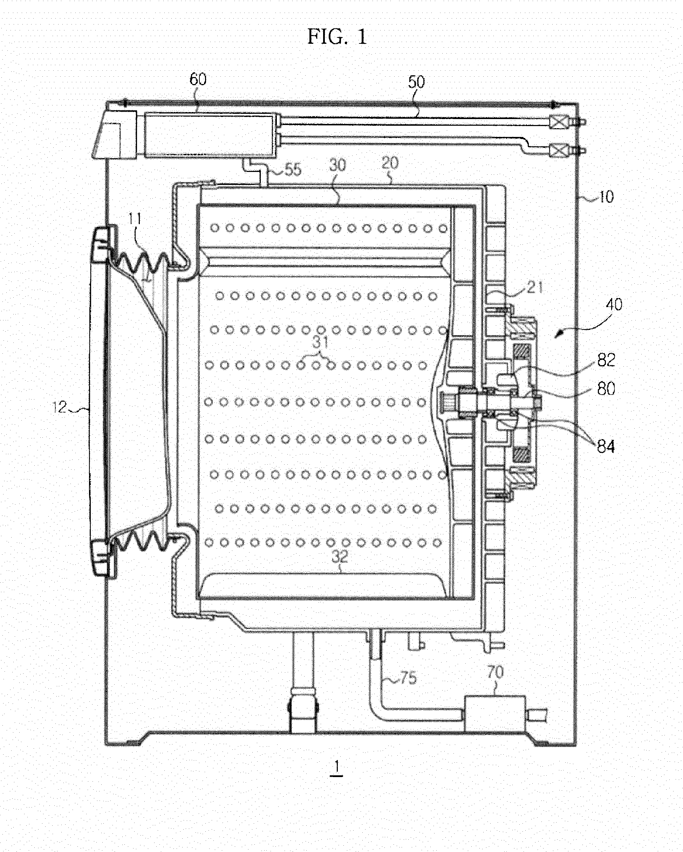

FIG. 1 is a perspective view illustrating a washing machine according to a first embodiment of the present disclosure.

Referring to FIG. 1, a washing machine 1 may include a cabinet 10 forming an external appearance of the washing machine 1, a tub 20 disposed at an inner side of the cabinet 10, a drum 30 rotatably disposed at an inner side of the tub 20 and a motor 40 configured to driving the drum 30.

The cabinet 10 may be provided at a front side thereof with an opening 11 through which laundry may be input to the inside of the drum 30. The opening 11 may be closed and opened by a door 12 which may be installed at the front side of the cabinet 10.

A water supply pipe 50 may be installed at an upper side of the tub 20 to supply washing water to the tub 20. One side of the water supply pipe 50 may be connected to a water supply and the other side of the water supply pipe 50 may be connected to a detergent supply device 60. The detergent supply device 60 may be connected to the tub 20 through a connection pipe 55. Water of the water supply pipe 50 may be supplied to the inside the tub 20 together with detergent by passing through the detergent supply device 60.

A drainage pump 70 and a drainage pipe 75 may be installed on a lower side of the tub 20 to discharge water of the tub 20 to the outside of the cabinet 10.

A plurality of through holes 31 may be formed through the circumference of the drum to distribute washing water. A plurality of lifters 32 may be installed on an inner circumferential surface of the drum 30 to enable rise and fall of laundry during the rotation of the drum 30.

A driving shaft 80 may be disposed between the drum 30 and the motor 40. The driving shaft 80 may transfer a rotary force of the motor to the drum 30. One end of the driving shaft 80 may be connected to the drum 30, and the other end of the driving shaft 80 may extend to an outer side of a rear wall 21 of the tub 30.

A bearing housing 82 may be installed on the rear wall 21 of the tub 20 while rotatably supporting the driving shaft 80. The bearing housing 82 may include an aluminum alloy. The bearing housing 82 may be inserted into the rear wall 21 of the tub 20 during injection molding of the tub 20. Bearings 84 may be installed between the bearing housing 82 and the driving shaft 80 such that the driving shaft 80 smoothly rotates.

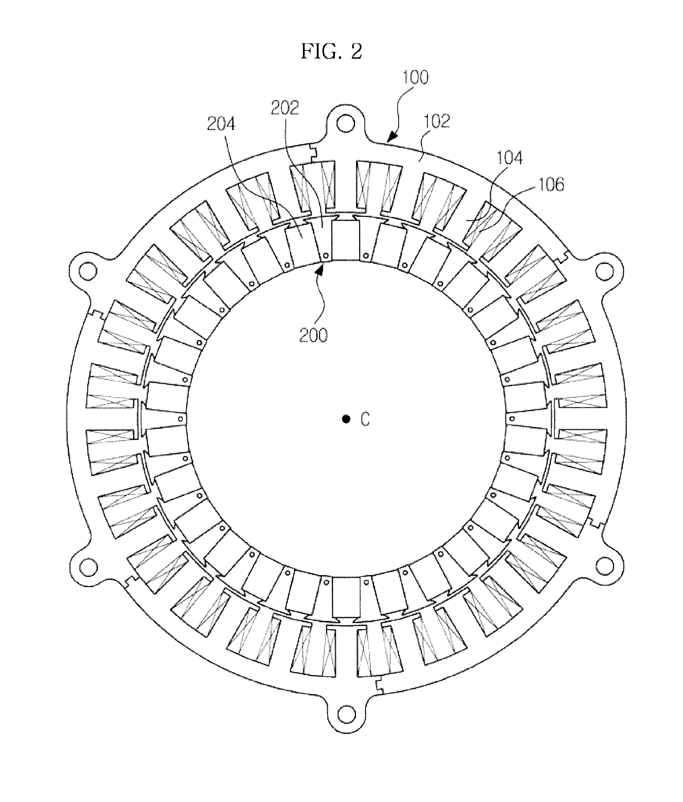

FIG. 2 is a plan view illustrating a stator and a rotor of a flux concentrated motor that is mounted on the washing machine according to a first embodiment of the present disclosure. The motor may include an inner rotor type having a rotor on an inner side of a stator and an outer rotor type having a rotor on an outer side of a stator. Hereinafter, the description of the motor will be made in relation to an outer rotor type motor.

Referring to FIGS. 1 and 2, the motor 40 may be disposed on an outer side of the tub 20 and may provide the drum 30 with power to rotate the drum 30 in both directions. The motor 40 may include a stator 100 mounted on the rear wall 21 of the tub 20 and a rotor 200 which may be disposed around the stator and may rotate by electromagnetic interaction with respect to the stator 100.

The stator 100 may include a ring-type stator body 102 forming the external appearance of the stator 100, a plurality of stator cores 104 radially protruding from an inner circumferential surface of the stator body 102 toward the center of the rotor 200, and a coil 106 wound around the stator core 104 and connected to an external power source.

The rotor 200 may include a plurality of cores 102 radially disposed, and magnets 204 disposed among the plurality of rotor cores 202. The magnet 201 may include ferrite or rare earth metal that semi-permanently maintains magnetic property at a high-energy density.

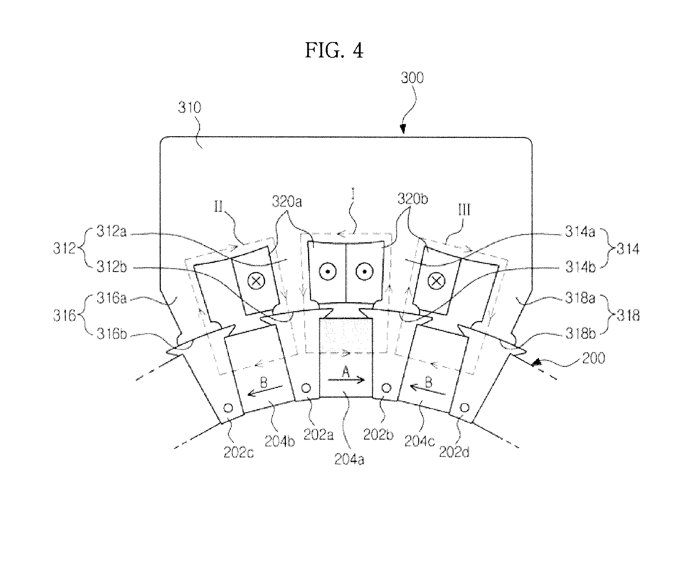

In addition, the magnet 204 may be disposed between the rotor cores 202 in an unmagnetized state. Referred to FIG. 4, the magnets 204 may be magnetized with alternating directions of a circumferential direction of the rotor 200 (Direction A) and a direction opposite to the circumferential direction of the rotor 200 (Direction B).

Since the magnets 204 may be magnetized with alternating directions of the circumferential direction (Direction A) and the opposite direction (Direction B), the same poles face each other, so that magnetic flux is concentrated and the leakage of magnetic flux is reduced.

Hereinafter, an apparatus for magnetizing the magnet 204 and a method of magnetizing the magnet 204 will be described.

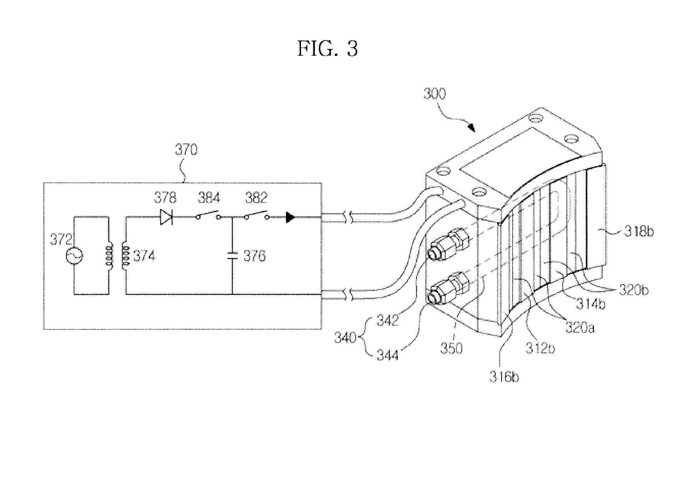

FIG. 3 is a perspective view illustrating a magnetizing apparatus according to a first embodiment of the present disclosure. FIG. 4 is a view showing a concept of magnetizing a magnet of a rotor by use of the magnetizing apparatus according to a first embodiment of the present disclosure.

Referring to FIGS. 3 and 4, a magnetizing apparatus 300 according to a first embodiment of the present disclosure may include a body 310, a plurality of teeth 312, 314, 316 and 318, and coils 320a and 320b wound around the plurality of teeth 312 and 314.

The body 310 may be integrally formed with the plurality of teeth 312, 314, 316, and 318 by use of a cool rolling steel sheet. An iron core may be used to reduce electric current applied to the magnetizing apparatus 300. In addition, in order to prevent the magnitude of the magnetic flux from decreasing due to eddy current, which is generated from the iron core when an impulse current is applied, a stratified type iron core may be used.

A cooling device may be provided on the body 310 to absorb heat generated from the driving of the magnetizing apparatus 30 and discharge the absorbed heat to outside. The cooling device may include a cooling water port 340 provided on one side of the body 310 and a cooling water passage 350, which may communicate with the cooling water port 340 and may pass through the inside the body 310. The cooling water port 340 may include an inlet 342 to receive cooling water and an outlet 344 to discharge cooling water. The cooling water introduced through the inlet 342 may absorb heat generated from the body 310 by passing through the cooling water passage 350 and may discharge the absorbed heat through the outlet 344 to the outside the body 310.

The plurality of teeth 312, 314, 316, and 318 may extend toward the center (C) to which the plurality of rotor cores 202 may be directed while being radially disposed. The plurality of teeth 312, 314, 316, and 318 may make contact with an outer circumferential surface of the rotor core 202 during a process of magnetizing the magnet 204 through the magnetizing apparatus 300.

In addition, when magnetizing the plurality of teeth 312, 314, 316, and 318, the plurality of teeth 312, 314, 316, and 318 may include two main teeth 312 and 314 and subsidiary teeth 316 and 318. The main teeth 312 and 314 may make contact with outer circumferential surface of two rotor cores 202a and 202b, respectively, which may be laterally disposed while interposing one of the magnets 204 therebetween. The subsidiary teeth 316 and 318 may be disposed at outer sides of the main teeth 312 and may make contact with outer circumferential surfaces of other rotor cores 202c and 202d, respectively, the rotor cores 202c and 202d being adjacent to the rotor cores 202c and 202d.

The main teeth 312 and 314 may include extension parts 312a and 314a extending from the body 310 by a predetermined length and may contact surfaces 312b and 314b formed at the ends of the extension parts 312a and 314a. Coils 320a and 320b may be wound around the extension parts 312a and 314a. The coils 320a and 320b may be connected to an electric current supply device 370, and may flow electric current therethrough. Electric current may flow through the coils 320a and 320b in opposite directions, respectively, such that a magnetic flux may be formed in the circumferential direction (Direction A) or the opposite direction (Direction B). That is, if an electric current flows through the coil 320a in a clockwise direction while having an extension direction of the extension part 312a as an axis, and an electric current flows through the coil 320b in a counter-clockwise direction while having an extension direction of the extension part 314a as an axis, a magnetic flux may be formed at the magnet 204a from left to right in FIG. 4. On the contrary, if an electric current flows through the coil 320a in a counter-clockwise direction and an electric current flows through the coil 320b in a clockwise direction, a magnetic flux may be formed at the magnet 204 from right to left in FIG. 4.

In a process of magnetizing the magnet 204a, the contact surfaces 312b and 314b may make contact with the outer circumferential surfaces of the two rotor cores 202a and 202b that are laterally disposed while interposing the magnet 204a therebetween. Referring to FIG. 4, the main teeth 312 and 314, the rotor cores 202a and 202b and the magnet 204a may form a closed-loop path (I) of magnetic flux in cooperation with one another along the main tooth 312, the rotor core 202a, the magnet 204a, the rotor core 202b and the main tooth 314. Accordingly, semi-permanent magnetic property may be formed at the magnet 204a in the circumferential direction (Direction A).

As described above, by disposing the magnetizing apparatus 300 to face the outer circumferential surfaces of the rotor cores 202a and 202b such that the magnet 204a may be magnetized with the circumferential direction (Direction A) or the opposite direction (Direction B), the magnet 204a may be equally magnetized without a portion remaining unmagnetized.

The subsidiary teeth 316 and 318 may be disposed on outer sides of the main teeth 312 and 314. The subsidiary teeth 316 and 318 may include extension parts 316a and 318a extending from the body 310 by a predetermined length, and also contact surfaces 316b and 318b may be formed at the ends of the extension parts 316a and 318a.

In a process of magnetizing the magnet 204a, the contact surfaces 316b and 318b may make contact with the outer circumferential surfaces of the rotor cores 202c and 202d that are laterally disposed on outer sides of the rotor cores 202a and 202b. Referring to FIG. 4, the subsidiary tooth 316, the rotor core 202c, and the magnet 204b may form a closed-loop path (II) of magnetic flux in cooperation with one another along the subsidiary tooth 316, the rotor core 202c, the magnet 204b, the rotor core 202a, and the main tooth 312. In addition, the subsidiary tooth 318, the rotor core 202d, and the magnet 204c may form a closed-loop path (III) of magnetic flux in cooperation with one another along the subsidiary tooth 318, the rotor core 202d, the magnet 204c, the rotor core 202b, and the main tooth 312.

As described above, by providing the subsidiary teeth 316 and 318 on outer sides of the main teeth 312 and 314, respectively, the closed-loop paths (II and III) may be formed, thereby possibly preventing a magnetic influence from being applied to the magnets 204b and 204c disposed on both sides of the magnet 204a in the process of magnetizing the magnet 204a.

The interval between the main teeth 312 and 314, the interval between the main tooth 312 and the subsidiary tooth 316, and the interval between the main tooth 314 and the subsidiary tooth 318 may be the same.

Although the magnetizing apparatus 300 may have a structure in which only one subsidiary tooth is provided on a respective outer side of main teeth, the present disclosure is not limited thereto. According to another embodiment, at least two subsidiary teeth may be provided on a respective outer side of the main teeth 312 and 314.

The electric current supply device 370 may be connected to the coils 320a and 320b to supply electric current to the coils 320a, and 320b wound around the extension parts 312a and 314a.

The electric current supply device 370 may include a commercial AC power source 372, a transformer 374, a capacitor 376, a diode 378, a magnetizing switch 382, and a charging switch 384. The transformer 374 may be connected in parallel with the AC power source 372, and configured to raise the voltage of the input AC power such that a high voltage is output. The capacitor 376 may be connected in parallel with an output end of the transformer and the coils 320a and 320b. The diode 378 may be connected in series with the output end of the transformer 374 and the capacitor 376 to rectify an output of the transformer 374. The magnetizing switch 382 may be connected between the capacitor 376 and the coils 320a and 320b to allow or block a magnetizing electric current supplied to the coils 320a and 320b. The charging switch 384 may be connected between the diode 378 and the capacitor 376 to allow or block power applied to the capacitor 376.

When charging the capacitor 376, the magnetizing switch 382 may be in an open state to prevent a magnetizing electric current from being supplied to the coils 320a and 320b. When supplying a magnetizing electric current, the magnetizing switch 382 may be in a closed state such that a magnetizing electric current is supplied to the coils 320a and 320b. When supplying a magnetizing electric current to the coils 320a and 320b, the charging switch 384 may be operated to block power from being supplied from the diode 378. When charging the capacitor 376, the charging switch 384 may be operated to allow power from being supplied from the diode 378.

The electric current supply device 370 may acquire a high voltage through the transformer 374 from the commercial AC power source 372, may charge several kilovolts (kV) of voltage in the capacitor 376 through the diode 378 and the charging switch 384 and may supply several kiloampere (kA) of magnetizing current to the magnetizing apparatus 300 by closing the magnetizing switch 382.

Hereinafter, a method of magnetizing the magnet 204 of the rotor 200 by use of the magnetizing apparatus 300 according to a first embodiment of the present disclosure will be described.

First, the magnetizing apparatus 300 may be disposed such that the contact surfaces 312b and 314b of the main teeth 312 and 314 may make contact with the outer circumferential surfaces of the rotor cores 202a and 202b, which may be laterally disposed on both sides of the magnet 204a, and the contact surfaces 316b and 318b of the subsidiary teeth 316 and 318 may make contact with the outer circumferential surface of the rotor cores 202c and 202d, which may be laterally disposed on outer sides of the rotor cores 202a and 202b.

Thereafter, the electric current supply device 370 may be operated to flow an electric current through the coils 320a and 320b wound around the main teeth 312 and 314 such that the closed-loop path (I) of magnetic flux may be formed by the main teeth 312 and 314, the rotor cores 202a and 202b and the magnet 204a and thus a semi-permanent magnetic property may be formed on the magnet 204a in the circumference direction (A).

Finally, the magnets 204 may be magnetized one by one by moving the magnets 204 or the magnetizing apparatus 300.

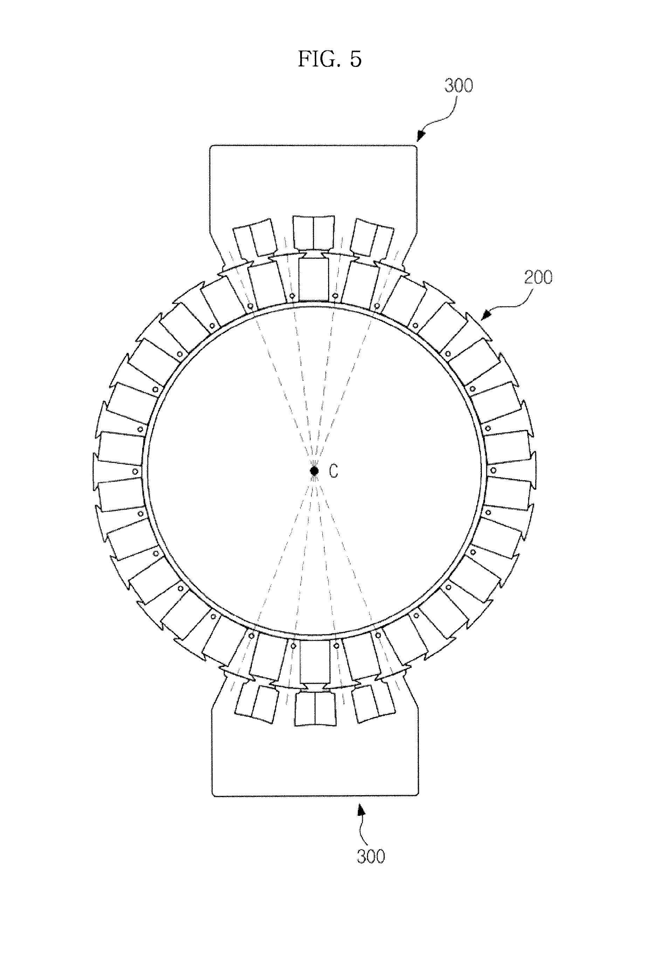

Meanwhile, the magnetizing apparatus 300 may be provided in a predetermined number, for example, at least two, such that at least two magnet 204 may be simultaneously magnetized. FIGS. 5 to 7 are sectional views illustrating a process of simultaneously magnetizing magnets of a rotor by use of a plurality of magnetizing apparatuses according to a first embodiment of the present disclosure.

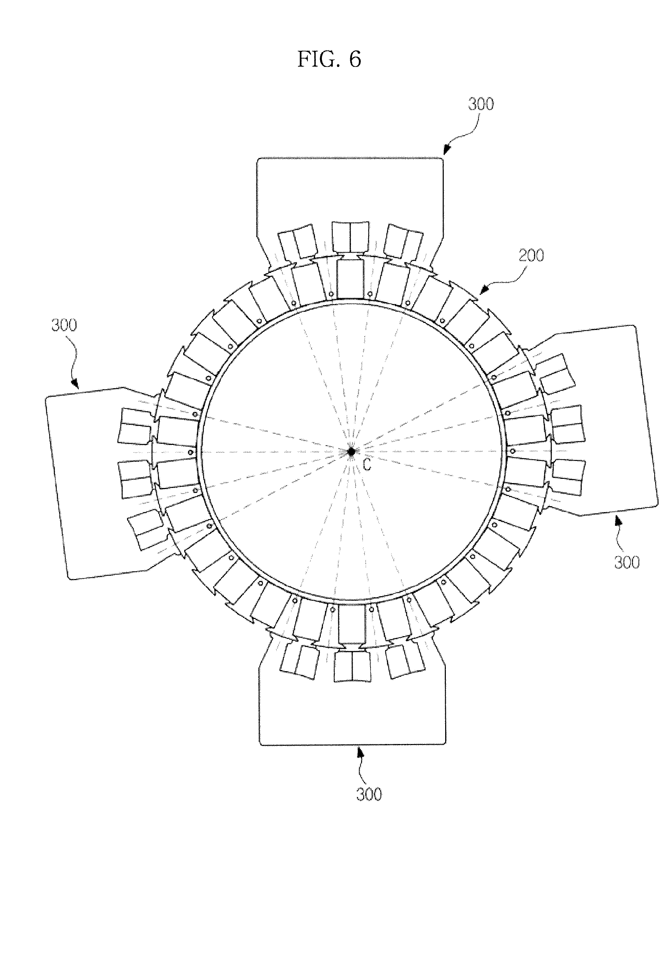

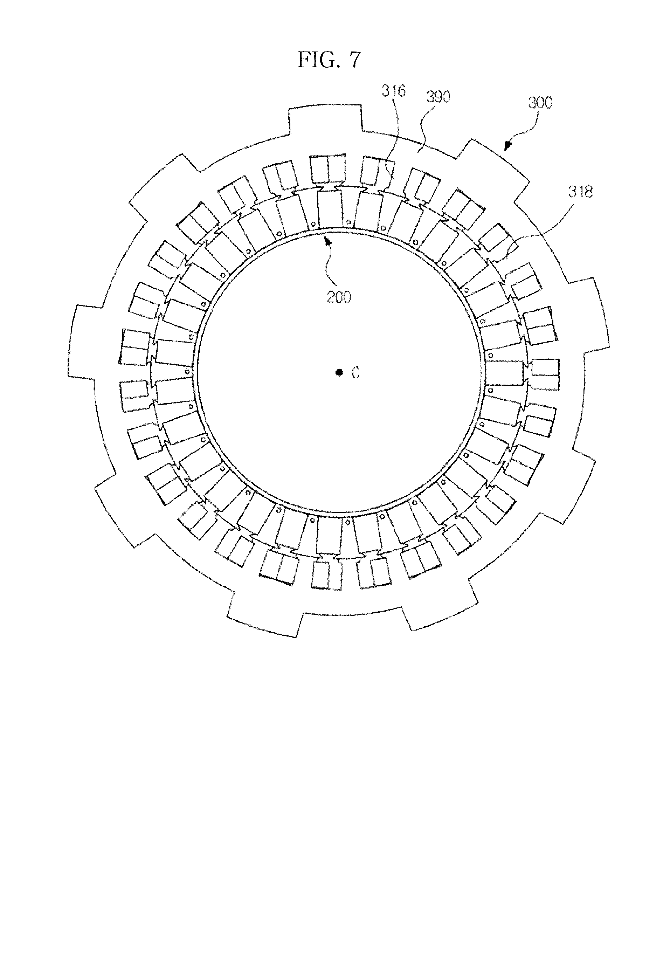

Referring to FIG. 5, two magnetizing apparatuses 300 may be disposed opposite to each other on a line passing through the center of the rotor 200 such that two magnets 204 are simultaneously magnetized. Referring to FIG. 6, the four magnetizing apparatuses 300 may be disposed at each quadrant position of the circumference of the rotor 200 such that four magnets 204 are simultaneously magnetized. Referring to FIG. 7, the magnetizing apparatus 300 may be provided in a plural, that is, more than two or four, to simultaneously magnetize the plurality of magnets 204. In this case, a plurality of magnetizing apparatuses 300 may be connected through a connection part 390 in a ring shape, because if a large number of magnetizing apparatuses 300 are separately disposed, the magnetizing apparatuses 300 may be separated from an original position due to attractive force or repulsive force. The connection part 390 may allow the plurality of magnetizing apparatuses 300 to be disposed at their positions around the plurality of magnets 204 while reinforcing the mechanical strength of the magnetizing apparatuses 300 such that equal intervals may be maintained among the magnetizing apparatuses 300 when the magnetizing apparatuses 300 are powered, and a magnetic force is generated. To this end, the connection part 390 may include the same material as that of the body 310 and the plurality of teeth 312, 314, 316, and 318 extending from the body 310.

In addition, each of the subsidiary teeth 316 and 318 may be shared between two adjacent magnetizing apparatuses of the magnetizing apparatuses 300. As described above, the subsidiary teeth 316 and 318 may prevent a magnetic influence from being applied to the magnets 204b and 204c that are disposed on both sides of the magnet 204a in the process of magnetizing the magnet 204a.

As described above, the magnetic apparatuses 300 may be connected to one another, thereby possibly enabling a plurality of magnets 204 to be simultaneously magnetized, and also possibly facilitating the delivery and disposition of the magnetic apparatuses 300.

Hereinafter, a magnetizing apparatus 400 according to a second embodiment of the present disclosure and a magnetizing method by use of the magnetizing apparatus will be described.

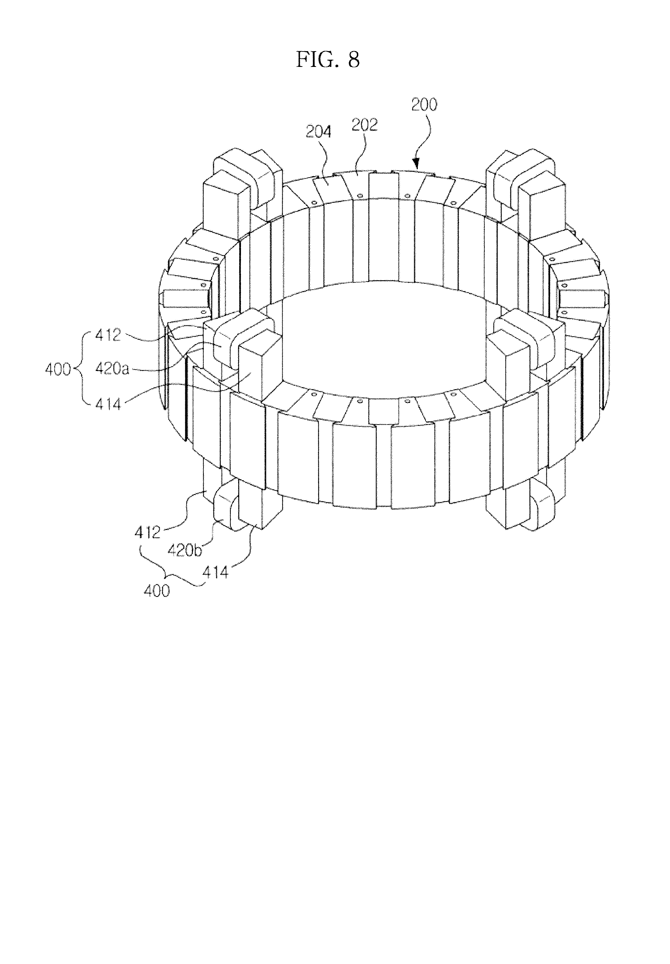

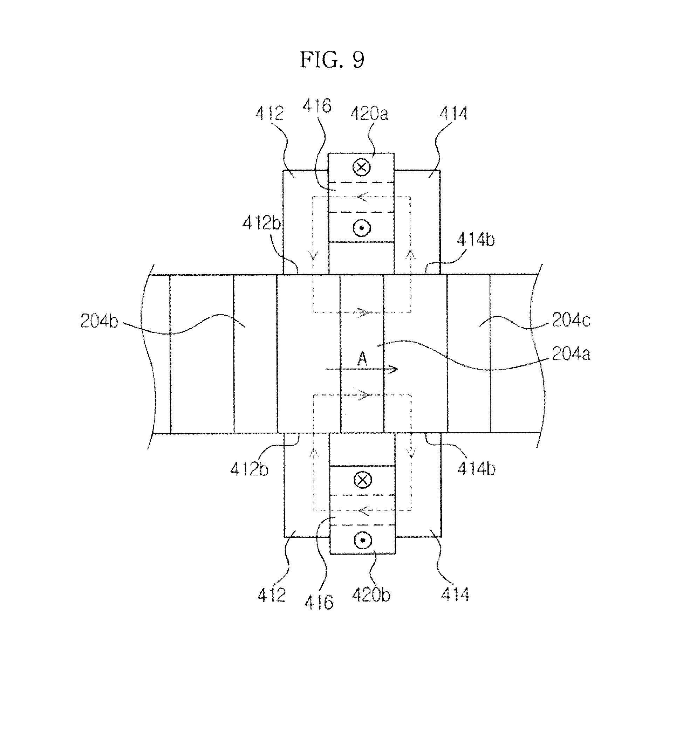

FIG. 8 is a perspective view illustrating a magnetizing apparatus according to a second embodiment of the present disclosure. FIG. 9 is a view showing a concept of magnetizing a magnet of a rotor by use of the magnetizing apparatus according to a second embodiment of the present disclosure.

Referring to FIGS. 8 and 9, the magnetizing apparatus 400 according to a second embodiment of the present disclosure may include a first magnetizing teeth 412, a second magnetizing teeth 414, a winding part 416, each of which may connect the first magnetizing tooth 412 to the second magnetizing tooth 414 and around which coils may be wound, and coils 420a and 420b possibly wound around the winding part 416. One of the magnetizing apparatuses 400 forming a pair may be provided on upper surfaces and the remaining of the magnetizing apparatuses 400 forming a pair may be provided on lower surfaces of the rotor cores 202a and 202b such that an upper portion and a lower portion of the magnet 204a may be equally magnetized.

The first magnetizing tooth 412, the second magnetizing teeth 414, and the winding part 416 may be integrally formed with one another by use of a cool rolling steel sheet. An iron core may be used to reduce an electric current applied to the magnetizing apparatus 400. In addition, in order to prevent the magnitude of the magnetic flux from decreasing due to eddy current, which is generated from the iron core when an impulse current is applied, a stratified type iron core may be used.

The first magnetizing tooth 412 and the second magnetizing tooth 414 may make a connection with an upper surface or a lower surface of each of the rotor cores 202 radially disposed. The first magnetizing tooth 412 and the second magnetizing tooth 414 may be provided at ends thereof with contact surfaces 412b and 414b, respectively.

In a process of magnetizing the magnet 204a, the contact surfaces 412b and 414b may contact upper surfaces or lower surfaces of the rotor cores 202a and 202b that are laterally disposed while interposing the magnet 204a therebetween. Referring to FIG. 9, the first magnetizing tooth 412, the second magnetizing tooth 414, the rotor cores 202a and 202b and the magnet 204a may form a closed-loop path (IV) of magnetic flux in cooperation with one another along the first magnetizing tooth 412, the rotor core 202a, the magnet 204a, the rotor core 202b, the second magnetizing tooth 414, and the wiring part 416. Accordingly, semi-permanent magnetic property may formed at the magnet 204a in the circumferential direction (Direction A).

The coils 420a and 420b are wound around the winding parts 416. The coils 420a and 420b may be connected to an electric current supply device 380 and may flow electric current therethrough. Opposite directions of electric current flow through the coils 420a and 420b, respectively, such that a magnetic flux may be formed at the magnet 204a in the circumferential direction (Direction A) or the opposite direction (Direction B). That is, if an electric current flows through the coil 420a in a counter-clockwise direction about the axis of the winding part 416 and an electric current flows through the coil 420b in a clockwise direction about the axis of the winding part 416, a magnetic flux may be formed at the magnet 204a from left to right in FIG. 9. On the contrary, if an electric current flows through the coil 420a in a clockwise direction about the axis of the winding part 416 and an electric current flows through the coil 420b in a counter-clockwise direction about the axis of the winding part 416, a magnetic flux may be formed at the magnet 204a from right to left.

As described above, one of the magnetizing apparatuses 400 forming a pair may be disposed above the rotor cores 202a and 202b, and the remaining of the magnetizing apparatuses 400 forming a pair may be disposed below the rotor cores 202a and 202b to magnetize the magnet 204a in the circumferential direction (Direction A) or the opposite direction (Direction B), so that the magnet 204a may be equally magnetized without remaining an unmagnetized portion.

Hereinafter, a method of magnetizing the magnet 204 of the rotor 200 by use of the magnetizing apparatus 400 according to a second embodiment of the present disclosure will be described.

First, a pair of magnetizing apparatuses 400 may be disposed such that the contact surfaces 412b and 414b of the first magnetizing tooth 412 and the second magnetizing tooth 414 of one of the magnetizing apparatuses 400 forming a pair may make contact with upper surfaces of the rotor cores 202a and 202b, respectively, and the contact surfaces 412b and 414b of the first magnetizing tooth 412 and the second magnetizing tooth 414 of the remaining of the magnetizing apparatuses 400 forming a pair may make contact with lower surfaces of the rotor cores 202a and 202b, respectively.

Thereafter, the electric current supply device 370 may be operated to flow an electric current through the coils 420a and 420b wound around the winding part 416 such that the first magnetizing tooth 412, the second magnetizing tooth 414, the rotor cores 202a and 202b and the magnet 204a may form a closed-loop path (IV) of magnetic flux in cooperation with one another, thereby possibly forming a semi-permanent magnetic property at the magnet 204a in the circumferential direction (Direction A).

Finally, by moving one of the magnets 204 and the magnetizing apparatuses 400, the plurality of magnets 204 may be magnetized one by one.

Two or more magnetizing apparatuses 400 may be used to simultaneously magnetize two or more magnets 204.

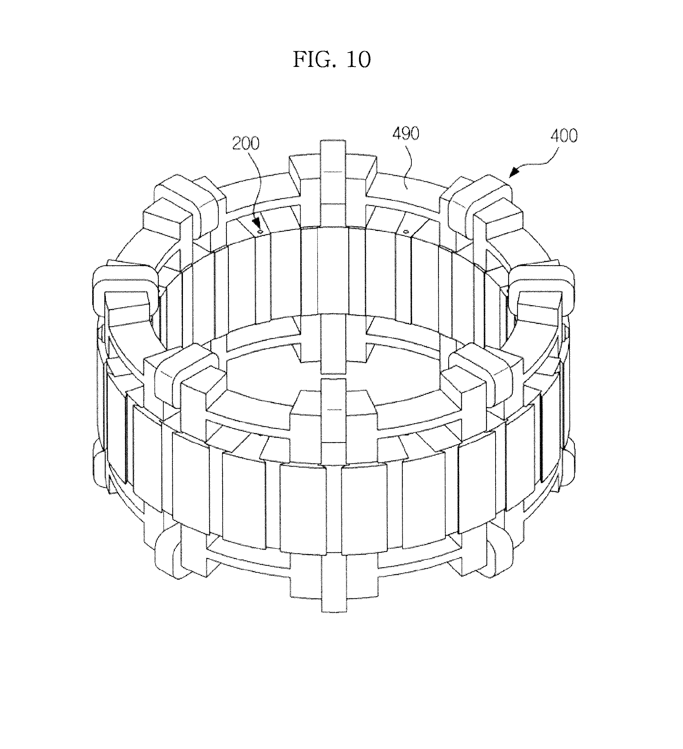

Referring to FIG. 10, a plurality of magnetizing apparatuses 400 may be connected through a connection part 490 in a ring shape, on the ground that if a large number of magnetizing apparatuses 400 are separately disposed, the magnetizing apparatuses 400 may be separated from an original position due to attractive force or repulsive force. The connection part 490 may allow the large number of magnetizing apparatuses 400 to be disposed at their positions around the plurality of magnets 204 while reinforcing the mechanical strength of the magnetizing apparatuses 400 such that equal intervals may be maintained among the magnetizing apparatuses 400 when the magnetizing apparatuses 400 are powered, and a magnetic force is generated. To this end, the connection part 490 may include the same material as that of the first magnetizing tooth 412, and the second magnetizing tooth 414.

As described above, the magnetic apparatuses 400 may be connected to one another, thereby enabling a plurality of magnets 204 to be simultaneously magnetized, and also facilitating the delivery and disposition of the magnetic apparatuses 400.

Hereinafter, a magnetizing apparatus 500 according to a third embodiment of the present disclosure and a magnetizing method by use of the magnetizing apparatus 500 will be described.

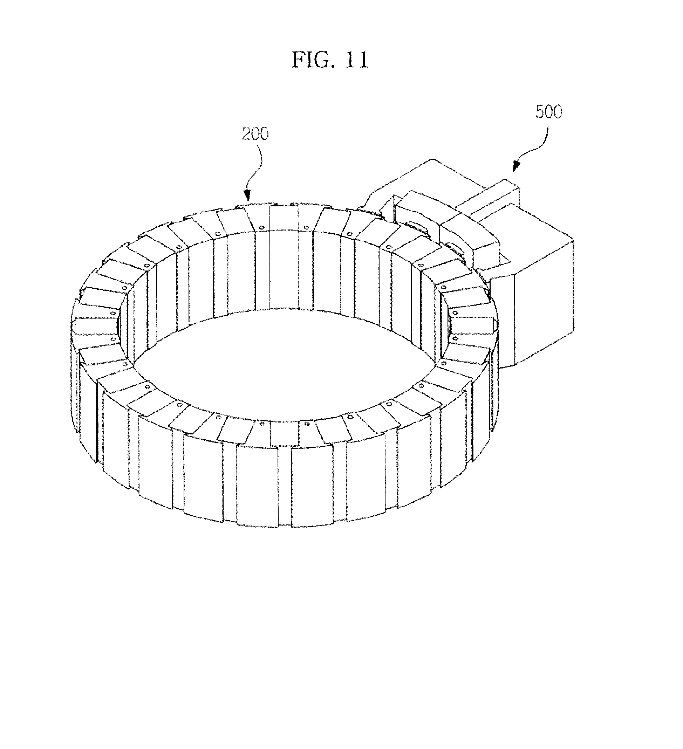

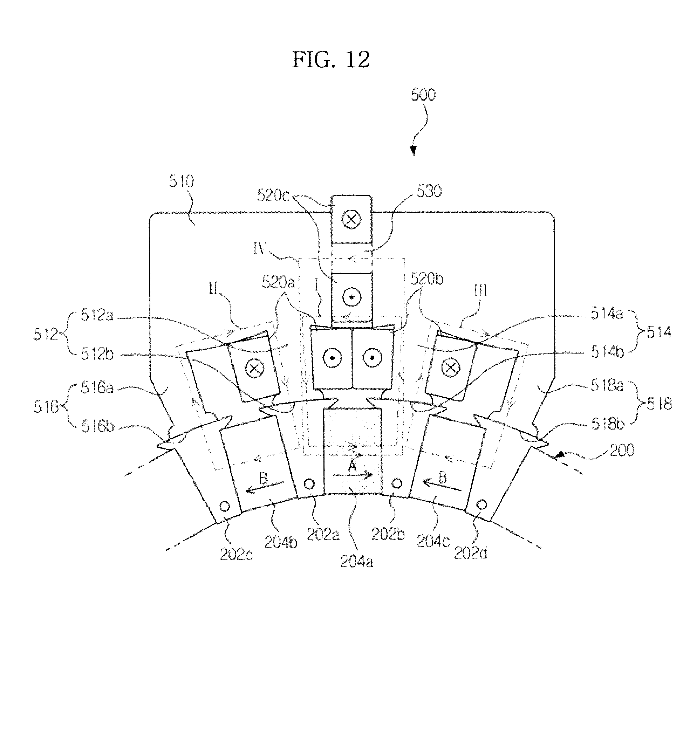

FIG. 11 is a perspective view illustrating a magnetizing apparatus according to a third embodiment of the present disclosure. FIG. 12 is a view showing a concept of magnetizing a magnet of a rotor by use of the magnetizing apparatus according to a third embodiment of the present disclosure.

Referring to FIGS. 11 and 12, the magnetizing apparatus 300 according to a third embodiment may include a body 510, a plurality of teeth 512, 514, 516, and 518 extending from the body 510, a winding part 530 provided on the body 510, and coils 520a, 520b, and 520c, in which the coil 520c is wound around the winding part 530.

The plurality of teeth 512, 514, 516, and 518 may extend toward the center (C) to which the plurality of rotor cores 202 are radially directed such that the plurality of teeth 512, 514, 516, and 518 may make contact with the outer circumferential surface of the rotor core 202 in the process of magnetizing the magnet 204.

The plurality of teeth 512, 514, 516, and 518 may include main teeth 512 and 514 and subsidiary teeth 516 and 518 that may be provided on outer sides of the main teeth 512 and 514. In the process of magnetizing the magnet 204a, the main teeth 512 and 514 may make contact with outer circumferential surfaces of the rotor cores 202a and 202b, respectively, which may be laterally disposed while interposing the magnet 204a therebetween. In the process of magnetizing the magnet 204a, the subsidiary teeth 516 and 518 may make contact with outer circumferential surfaces of the rotor cores 202c and 202d that may be laterally disposed on outer sides of the rotor cores 202a and 202b.

The main teeth 512 and 514 may include extension parts 512a and 514a extending from the body 510 by a predetermined length and contact surfaces 512b and 514b formed at the ends of the extension parts 512a and 514a. Coils 520a and 520b may be wound around the extension parts 512a and 514a. Electric current may flow through the coils 520a and 520b in opposite directions, respectively, such that a magnetic flux may be formed at the magnet 204a in the circumferential direction (Direction A) or in the opposite direction (Direction B). That is, if an electric current flows through the coil 520a in a clockwise direction while having an extension direction of the extension part 512a as an axis and an electric current flows through the coil 520b in a counter-clockwise direction while having an extension direction of the extension part 14a as an axis, a magnetic flux may be formed at the magnet 204a from left to right in FIG. 12. On the contrary, if an electric current flows through the coil 520a in a counter-clockwise direction and an electric current flows through the coil 520b in a clockwise direction, a magnetic flux may be formed at the magnet 204 from right to left in FIG. 12.

In the process of magnetizing the magnet 204a, the contact surfaces 512b and 514b may make contact with the outer circumferential surfaces of the two rotor cores 202a and 202b that are laterally disposed while interposing the magnet 204a therebetween. Referring to FIG. 12, the main teeth 512 and 514, the rotor cores 202a and 202b, and the magnet 204a may form a closed-loop path (I) of magnetic flux in cooperation with one another along the main tooth 512, the rotor core 202a, the magnet 204a, the rotor core 202b, and the main tooth 514. Accordingly, a semi-permanent magnetic property may be formed at the magnet 204a in the circumferential direction (Direction A).

The coil 520c may be wound around the winding part 530 to form a magnetic flux at the magnet 204a in the same direction as a direction of a magnetic flux that may be formed at the magnet 204 when electric current flows through the coils 520a and 520b wound around the main teeth 512 and 514. Referring to FIG. 12, the winding part 530, the main teeth 512 and 514, the rotor core 202a and 202b, and the magnet 204a may form a closed-loop path (IV) of magnetic flux in cooperation with one another along the main tooth 512, the rotor core 202a, the magnet 204a, the rotor core 202b, the main tooth 514, and the winding part 530, thereby possibly forming a magnetic flux at the magnet 204a in the circumferential direction (Direction A) similar to when the closed-loop path (I) of magnetic flux may be formed. Since the closed-loop path (IV) may overlap the closed-loop path (I) at the magnet 204a, the magnetizing performance may be improved.

As described above, by disposing the magnetizing apparatus 500 to face the outer circumferential surfaces of the rotor cores 202a and 202b such that the magnet 204a is magnetized in the circumferential direction (Direction A) or in the opposite direction (Direction B), the magnet 204a may be equally magnetized without an unmagnetized portion remaining.

The subsidiary teeth 516 and 518 may be disposed on outer sides of the main teeth 512 and 514. The subsidiary teeth 516 and 518 may include extension parts 516a and 518a extending from the body 510 by a predetermined length and contact surfaces 516b and 518b formed at the ends of the extension parts 516a and 518a.

In a process of magnetizing the magnet 204a, the contact surfaces 516b and 518b may make contact with the outer circumferential surfaces of the rotor cores 202c and 202d that are laterally disposed on outer sides of the rotor cores 202a and 202b. Referring to FIG. 12, the subsidiary tooth 516, the rotor core 202c and the magnet 204b may form a closed-loop path (II) of magnetic flux in cooperation with one another along the subsidiary tooth 516, the rotor core 202c, the magnet 204b, the rotor core 202a, and the main tooth 512. In addition, the subsidiary tooth 518, the rotor core 202d, and the magnet 204c may form a closed-loop path (III) of magnetic flux in cooperation with one another along the subsidiary tooth 518, the rotor core 202d, the magnet 204c, the rotor core 202b, and the main tooth 512.

As described above, by providing the subsidiary teeth 516 and 518 on outer sides of the main teeth 512 and 514, respectively to form the closed-loop paths (II and III), thereby a magnetic influence may be prevented from being applied to the magnets 204b and 204c disposed at both sides of the magnet 204a in the process of magnetizing the magnet 204a.

The interval between the main teeth 512 and 514, the interval between the main tooth 512 and the subsidiary tooth 516, and the interval between the main tooth 514 and the subsidiary tooth 518 may be the same.

Although the magnetizing apparatus 500 may have a structure in which only one subsidiary tooth is provided on a respective outer side of the main tooth teeth, the present disclosure is not limited thereto. According to another embodiment, at least two subsidiary teeth may be provided on a respective outer side of the main teeth.

Hereinafter, a method of magnetizing the magnet 204 of the rotor 200 by use of the magnetizing apparatus 500 according to a third embodiment of the present disclosure will be described.

First, the magnetizing apparatus 500 may be disposed such that the contact surfaces 512b and 514b of the main teeth 512 and 514 may make contact with the outer circumferential surfaces of the rotor cores 202a and 202b, which may be laterally disposed on both sides of the magnet 204a, and the contact surfaces 516b and 518b of the subsidiary teeth 516 and 518 may make contact with the outer circumferential surface of the rotor cores 202c and 202d, which may be laterally disposed on outer sides of the rotor cores 202a and 202b.

Thereafter, an electric current may be applied to the coils 520a and 520b wound around the main teeth 512 and 514 such that the closed-loop paths (I) and (IV) may be formed by the main teeth 512 and 514, the rotor cores 202a and 202b and the magnet 204a and thus semi-permanent magnetic property may be formed on the magnet 204a in the circumference direction (A).

Finally, the magnets 204 may be magnetized one by one by moving the magnets 204 or the magnetizing apparatus 300.

Meanwhile, the magnetizing apparatus 500 may be provided in a predetermined number, for example, at least two, such that at least two magnet 204 may be simultaneously magnetized.

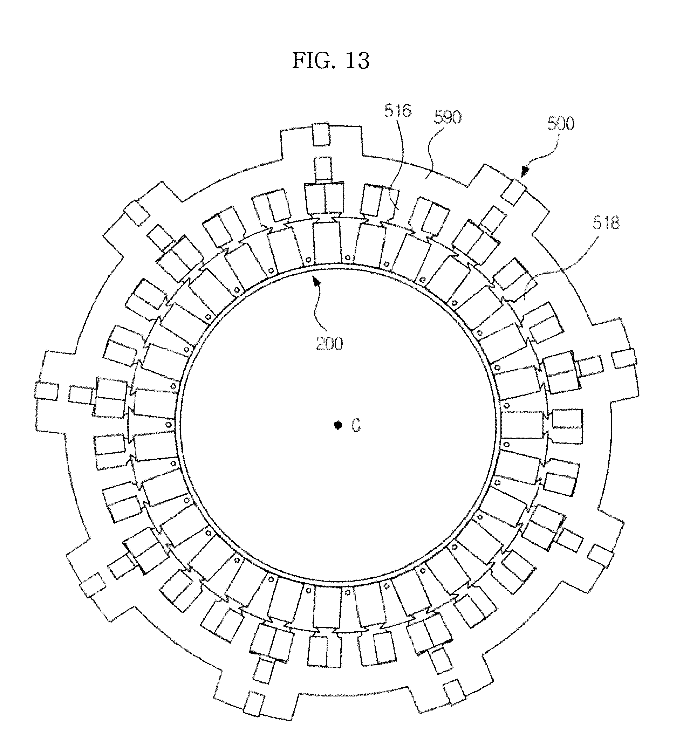

Referring to FIG. 13, the at least two magnetizing apparatuses 500 may be connected through a connection part 590 in a ring shape, on the ground that if a large number of magnetizing apparatuses 500 are separately disposed, the magnetizing apparatuses 500 may be separated from an original position due to attractive force or repulsive force. The connection part 590 may allow the plurality of magnetizing apparatuses 500 to be disposed at their positions around the plurality of magnets 504 while reinforcing the mechanical strength of the magnetizing apparatuses 500 such that equal intervals may be maintained among the magnetizing apparatuses 500 when the magnetizing apparatuses 500 are powered, and a magnetic force is generated. To this end, the connection part 590 may include the same material as that of the body 510 and the plurality of teeth 512, 514, 516, and 518 extending from the body 510.

In addition, each of the subsidiary teeth 516 and 518 may be shared between two adjacent magnetizing apparatuses of the magnetizing apparatuses 500. As described above, the subsidiary teeth 516 and 518 may prevent a magnetic influence from being applied to the magnets 204b and 204c that may be disposed on both sides of the magnet 204a in the process of magnetizing the magnet 204a.

As described above, the magnetic apparatuses 500 may be connected to one another, thereby enabling a plurality of magnets 204 to be simultaneously magnetized, and also facilitating the delivery and disposition of the magnetic apparatuses 500.

Hereinafter, the structure of the rotor 200 capable of equally magnetizing the magnet 204 included in the rotor 200 by use of the magnetizing apparatus 300 will be described in detail.

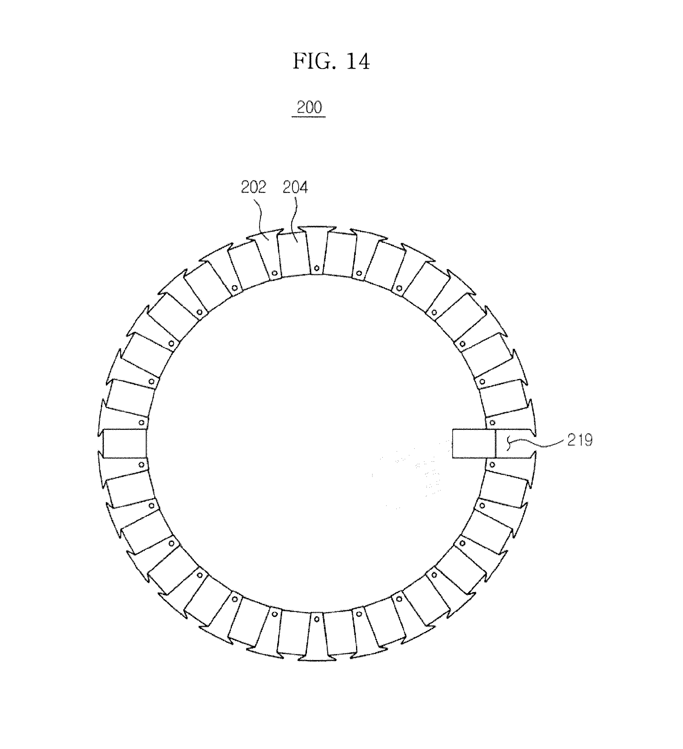

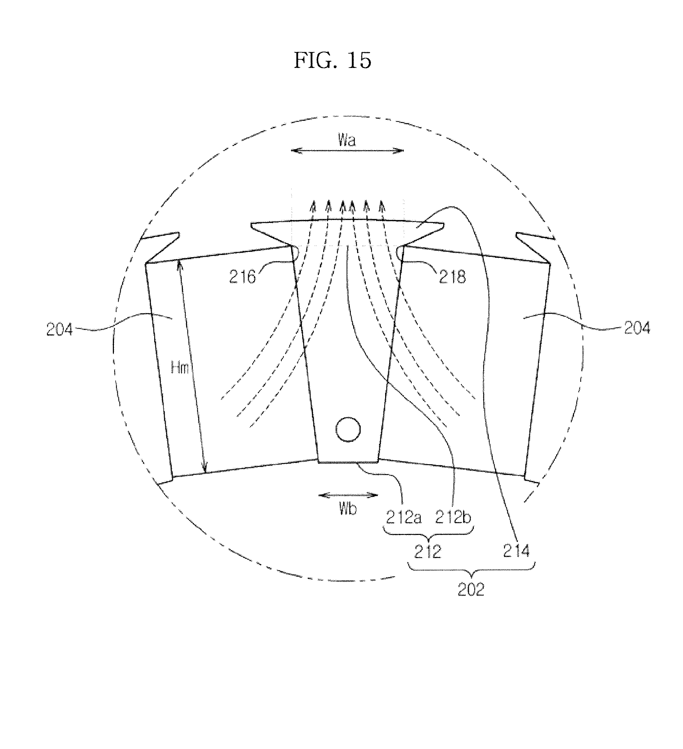

FIG. 14 is a view illustrating a post-magnetization scheme in which a magnet is assembled to a rotor core forming a rotor according to the first example of the present disclosure. FIG. 15 is an enlarged view of a part of FIG. 14 showing a magnetic flux path when magnets have been magnetized.

Referring to FIG. 14, the rotor 200 may include the rotor cores 202 radially disposed and the magnets 204 disposed among the rotor cores 202. The magnet 204 may be disposed between the rotor cores 202 in an unmagnetized state. Referring to FIG. 4, the magnets 204 may be magnetized in alternating directions of the circumferential direction of the rotor 200 (Direction A) and in the opposite direction (Direction B).

Since the magnets 204 may be magnetized in alternating directions of the circumferential direction (Direction A) and in the opposite direction (Direction B), the same poles may face each other, so that magnetic flux may be concentrated and the leakage of magnetic flux may be reduced.

Referring to FIG. 15, the rotor core 202 may include a magnetic flux inlet 212, a magnetic flux outlet 214, a first corner 216, and a second corner 218. The magnetic flux inlet 212 may receive a magnetic flux, which is formed on the magnets 204 disposed on both sides of the rotor core 202, in the direction of arrows shown in FIG. 15. The magnetic flux outlet 214 may be connected to the magnetic flux inlet 212 to discharge the magnetic flux, which may be received through the magnetic flux inlet 212, in the direction of arrows shown in FIG. 15. The first corner 216 and the second corner 218 may be formed at a connection portion between the magnetic flux inlet 212 and the magnetic flux outlet 214.

The magnetic flux inlet 212 may include a lower portion 212a and an upper portion 212b, which may be disposed being farther from the center of the rotor 200 than the lower portion 212a, and may be connected to the magnetic flux outlet 214. The magnetic flux inlet 212 may have a width getting larger from the lower portion 212a and the upper portion 212b in a circumference direction of the rotor 202.

The magnetic flux outlet 214 may be coupled to the upper portion 212b of the magnetic flux inlet 212 and may serve as a path to discharge the magnetic flux introduced through the magnetic flux inlet 212. The magnetic flux outlet 214 may be formed by laterally extending from the connection portion with respect to the magnetic flux inlet 212, and may have an upper portion with a predetermined curvature that may allow the magnetic flux to be equally discharged.

An insertion space 219 may be formed between adjacent two rotor cores 202 to have the magnet 204 inserted thereinto. The position of the magnet 204 along the circumferential direction of the rotor 200 may be determined by the magnetic flux inlet 212 and the position of the magnet 204 along the radial direction of the rotor 200 may be determined by the magnetic flux outlet 214. In addition, when the rotor 200 rotates, the magnetic flux inlet 212 may support the magnet 214 in the circumferential direction of the rotor 200, and the magnetic flux outlet 214 may support the magnet 204 in the radial direction of the rotor 200.

Meanwhile, the magnetic flux inlet 212 may be integrally formed with the magnetic flux outlet 214 by use of metal.

The distance between the first corner 216 and the second corner 218 may be identical to the width of the upper portion 212b of the magnetic flux inlet 212. In equally magnetizing the magnet 204, the distance between the first corner 216 and the second corner 218 may serve as a parameter together with the height (Hm) of the magnet 204.

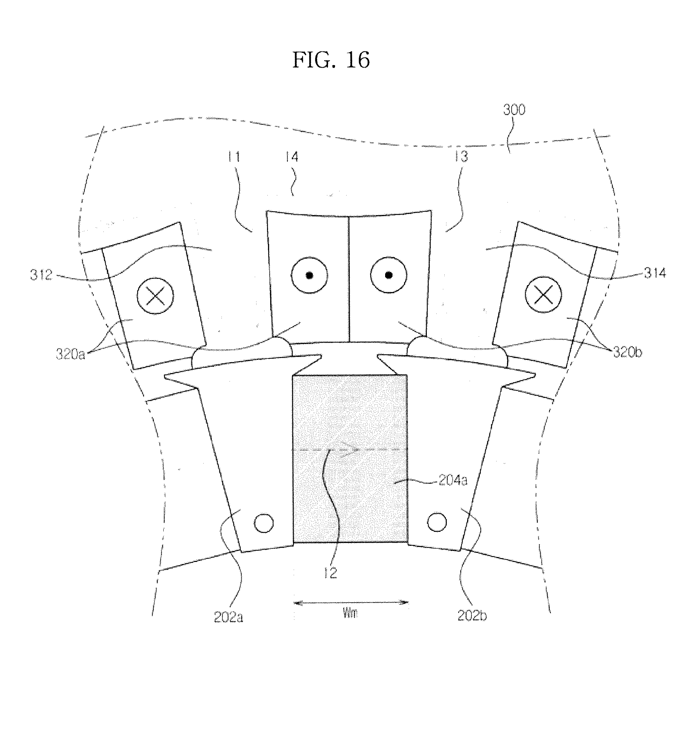

FIG. 16 is an enlarged view of a part of FIG. 4 showing a magnetic flux path formed between a magnet and a magnetizing apparatus during magnetization of the magnet.

Referring to FIG. 16, in a state that the main teeth 312 and 314 of the magnetizing apparatus 300 make the outer circumferential surfaces of the rotor cores 202a and 202b that are laterally disposed on both sides of the magnet 204, if an electric current flows through the coils 320a and 320b wound around the main teeth 312 and 314, respectively, the closed-loop path (I) of magnetic flux may be formed by the main teeth 312 and 314, the rotor cores 202a and 202b, and the magnet 204a. The closed-loop path (I) may be divided into a partial path (I1) formed by the main tooth 312 and the rotor core 202a, a partial path (12) formed by the rotor cores 202a and 202b and the magnet 204a, a partial path (13) formed by the rotor core 202b and the main tooth 314 and a partial path (I4) formed by the body 310 of the magnetizing apparatus 300.

As described above, when the rotor 200 rotates, the magnet flux, which may be formed on the magnet 204a that has been magnetized, is introduced to the rotor core 202b through the magnetic flux inlet 212, and may be discharged to outside through the magnetic flux outlet 214. If the area of the magnetic flux outlet 214 is getting smaller in relation to the area of a side of the magnetic flux inlet 212 adjacent to the magnet 204a, the magnetic flux may be more concentrated. The concentration of magnetic flux may improve the torque-related characteristic of the rotor 200, and thus may improve the overall performance of the motor 40. The area of a side of the magnetic flux inlet 212 adjacent to the magnet 204a may correspond to the area of the partial path (12) formed by the rotor cores 202a and 202b and the magnet 204a. The area of the magnetic flux outlet 214 may correspond to the area of the partial path (13) formed by the rotor core 202b and the main tooth 314. Accordingly, if the ratio between the area of the partial path (I3) formed by the rotor core 202b and the main tooth 314 and the area of the partial path (I2) formed by the rotor cores 202a and 202b and the magnet 204a is great, the concentration of magnetic flux may be increased.

In order to improve the performance of the motor 40, the ratio between the area of the partial path (13) formed by the rotor core 202b and the main tooth 314 and the area of the partial path (I2) formed by the rotor cores 202a and 202b and the magnet 204a may be as large as possible. However, the ratio may satisfy a predetermined limitation. That is, if the ratio between the area of the partial path (13) formed by the rotor core 202b and the main tooth 314 and the area of the partial path (12) formed by the rotor cores 202a and 202b and the magnet 204a exceeds the limitation, a magnetic saturation may occur at upper portions S1 and S2 of the rotor cores 202a and 202b as shown in FIG. 15 in the process of magnetizing the magnet 204a, and the magnet 204a may not be equally magnetized. The magnetic saturation may occur when the area of one part of a closed-loop path is narrow in relation to the area of another part of the closed-loop-path in a state that a magnetic flux is formed along the closed-loop path. If a magnetic saturation occurs, a magnetic flux may not flow smoothly, and the magnitude of an electric current required to form a desired magnetic flux may be significantly increased.

That is, a ratio between the area of the partial path (13) and the area of the partial path (12) for improving the performance of the motor 40 after magnetization and a ratio between the area of the partial path (I3) and the area of the partial path (12) for equally magnetizing the magnet 204a while avoiding the magnetic saturation in the magnetization may be in a trade-off relationship. If the former is emphasized, the performance of the motor 40 may be improved, but the magnet 204a is not equally magnetized. If the latter is emphasized, the magnet 204a may be equally magnetized, but the performance of the motor 40 may be lowered.

Accordingly, in order to equally magnetize while maintaining a predetermined performance of the motor 40, a ratio between the area of the partial path (I3) and the area of the partial path (I2) may fall into a predetermined range.

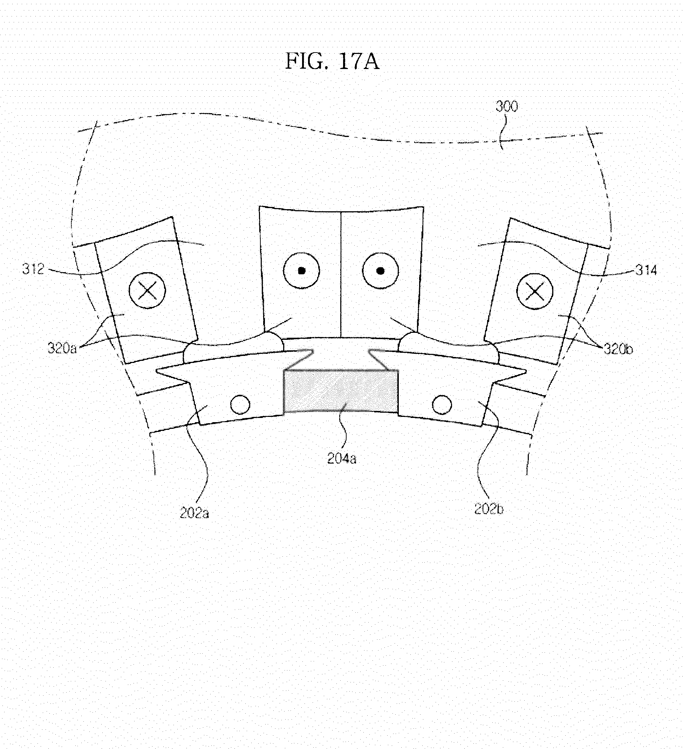

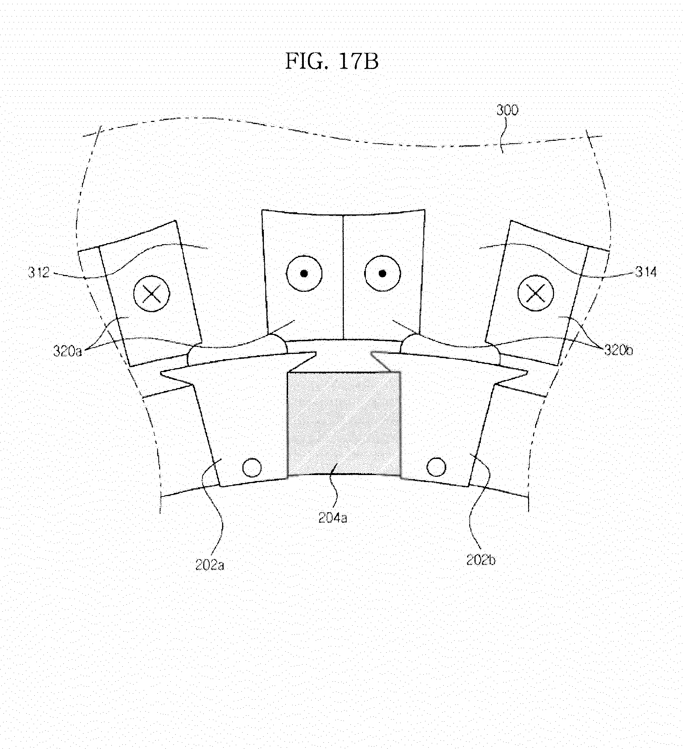

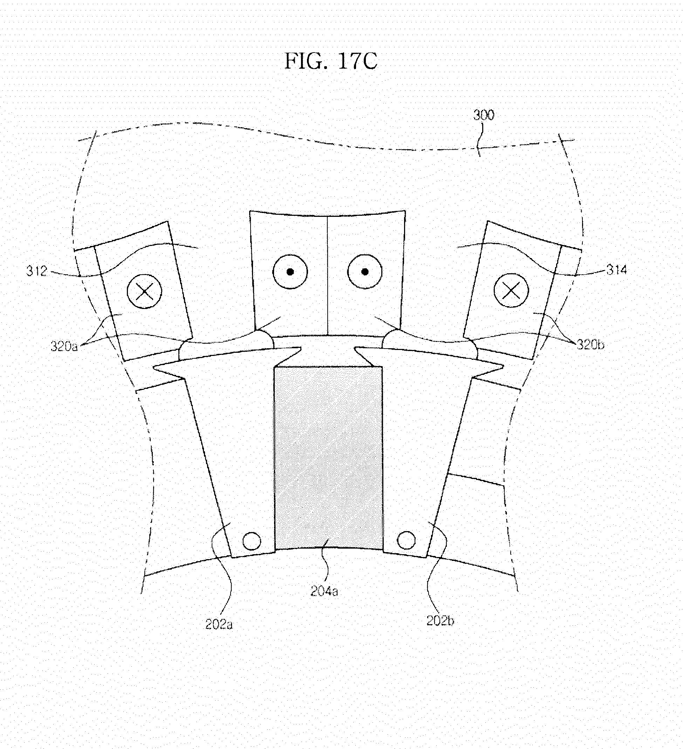

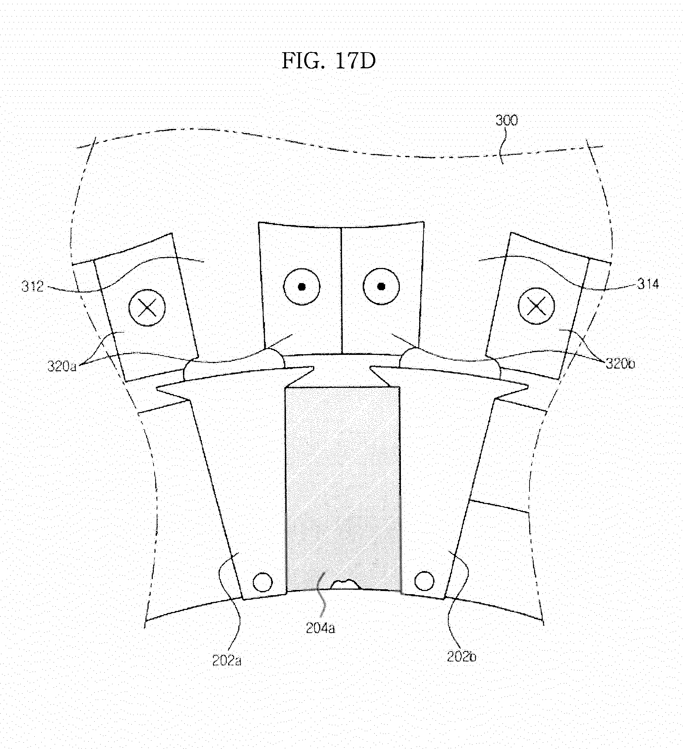

FIGS. 17A to 17D are views illustrating an area of a magnet which is magnetized according to the aspect ratio of a rotor core. FIG. 17A shows a magnet having an aspect ratio of 0.5. FIG. 17B shows a magnet having an aspect ratio of 1.5. FIG. 17C shows a magnet having an aspect ratio of 3. FIG. 17D shows a magnet having an aspect ratio of 3.2. In FIGS. 17A to 17D, the area shown in dark color represents an area of the magnet which is equally magnetized with a magnetic flux density over a predetermined level.

The aspect ratio of the rotor core 202 represents the ratio (Hm/Wa) of the width (Wa) between the first corner 216 and the second corner 218 to the height (Hm) of the magnet 204. Hereinafter, the ratio (Hm/Wa) is referred to as an aspect ratio of the rotor core 202. A factor related to equal magnetization may include the area of the partial path (I3) formed by the rotor core 202b and the main tooth 314 and the area of the partial path (12) formed by the rotor cores 202a and 202b and the magnet 204a. The area of the partial path (I3) formed by the rotor core 202b and the main tooth 314 may be proportional to the width (Wa) between the first corner 216 and the second corner 218 to the height (Hm) of the magnet 204. The area of the partial path (12) formed by the rotor cores 202a and 202b and the magnet 204a may be proportional to the height (Him) of the magnet 204. Accordingly, the aspect ratio of the rotor core 202 may serve as a parameter used to determine the performance of the motor 40 and the degree to which the magnet 204a is equally magnetized.

Herein, the magnetizing of the magnet 204a equally represents that an unmagnetized area does not exist, a magnetized area having a lower magnetic flux density than other magnetized areas does not exit, and each area of the magnet 204a has a magnetic flux density over a predetermined level in the process of magnetizing the magnet 204a.

Referring to FIGS. 17A to 17D, if the rotor core 202 has an aspect ratio below 3.0, the magnet 204a may be equally magnetized. If the rotor core 202 has an aspect ratio over 3.2, an unmagnetized area may be formed. Accordingly, in order to equally magnetize the magnet 204a, the rotor core 202 may have an aspect ratio of 3.0 or below.

As described above, in order to improve the performance of the motor 40, the magnetic flux may be concentrated at the rotor core 202. In order to allow the magnetic flux to be concentrated, the rotor core 202 may have an aspect ratio of 0.5 or above. That is, the magnetic flux, which may be introduced from the magnets 204a disposed on both sides of the rotor core 202 through the magnetic flux inlet 212, may be equal to or larger than the magnetic flux discharged through the magnetic flux outlet 214. The magnetic flux introduced through the magnetic flux inlet 212 may be in proportion to the height (Him) of the magnet 204a and the magnetic flux discharged through the magnetic flux outlet 214 may be in proportion to the width (Wa) between the first corner 216 and the second corner 218. Accordingly, the width (Wa) between the first corner 216 and the second corner 218 may be as twice as large as the height (Him) of the magnet 204a or less, such that the rotor core 202 may have an aspect of 0.5 or above.

In addition to the width (Wa) between the first corner 216 and the second corner 218 and the height (Him) of the magnet 204a, a width (Wb) of the lower portion 202a of the magnetic flux inlet 212 and a width (Wm) of the magnet 204a also serve as a parameter affecting the equal magnetizing of the magnet 204a.

If the width (Wb) of the lower portion 202a of the magnetic flux inlet 212 is excessively small in relation to the width (Wa) between the first corner 216 and the second corner 218, a magnetic saturation may occur at the lower portion of the 202a of the magnetic flux inlet 212. If the width (Wb) of the lower portion 202a of the magnetic flux inlet 212 is excessively larger in relation to the width (Wa) between the first corner 216 and the second corner 218, a magnetic flux path may be increased and thus an unmagnetized area may be formed at the magnet 204. Accordingly, in order to equally magnetize the magnet 204a, the ratio (Wa/Wb) of the width (Wa) between the first corner 216 and the second corner 218 to the width (Wb) of the lower portion 202a of the magnetic flux inlet 212 may be 1.5 or above and 3.0 or below in a state that the rotor core 202 has an aspect ratio of 0.5 or above and 3.0 or below.

In addition, if the width (Wm) of the magnet 204a is excessively small in relation to the width (Wa) between the first corner 216 and the second corner 218, a sufficient amount of magnetic flux may not be formed at the magnet 204a for concentration. If the width (Wm) of the magnet 204a is excessively larger in relation to the width (Wa) between the first corner 216 and the second corner 218, a magnetic flux path may be increased and thus an unmagnetized area may be formed at the magnet 204. Accordingly, in order to equally magnetize the magnet 204a, the ratio (Wa/Wm) between the width (Wa) between the first corner 216 and the second corner 218 and the width (Wm) of the magnet 204a may be 0.5 or above and 2.0 or below in a state that the rotor core 202 has an aspect ratio of 0.5 or above and 3.0 or below.

Although a few embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A motor comprising:
a stator, which comprises a stator body, a plurality of stator cores extending from an inner circumferential surface of the stator core toward a center of the stator and a coil wound around the stator core and connected to an external power source such that electric current flows through the coil; and
a rotor, which is rotatably disposed on an inner side of the stator and comprises a plurality of cores and a plurality of magnets, the plurality of cores and the plurality of magnets being alternately disposed,
wherein each core comprises:
a magnetic flux inlet configured to receive a magnetic flux formed at the magnet;
a magnetic flux outlet configured to discharge the magnetic flux introduced through the magnetic flux inlet; and
a first corner and a second corner formed at a connection portion between the magnetic flux inlet and the magnetic flux outlet, wherein
a ratio between a height of the magnet and a distance between the first corner and the second corner is about 0.5 or above and about 2.7 or below.

2. The motor of claim 1, wherein a position of the magnet along a circumferential direction of the rotor is determined by the magnetic flux inlet, and a position of the magnet along a radial direction of the rotor is determined by the magnetic flux outlet.

3. The motor of claim 2, wherein a ratio between a width of the magnet and the distance between the first corner and the second corner is about 0.5 or above and about 2 or below.

4. The motor of claim 1, wherein the plurality of magnets comprises a first magnet and a second magnet which are disposed on both sides of one core of the plurality of cores, the two magnets forming opposite directions of magnetic flux flows that are directed toward the one core.

5. The motor of claim 4, wherein the magnetic flux flows coming out of the first magnet and the second magnet are introduced to the magnetic flux inlet, are combined and then discharged through the magnetic flux outlet to the outside of the core.

6. The motor of claim 5, wherein a width of the magnetic flux inlet increases from a lower portion thereof to an upper portion thereof in a circumference direction of the rotor, the upper portion being farther from a center of the rotor than the lower portion.

7. The motor of claim 6, wherein a ratio between a width of the upper portion of the magnetic flux inlet and a width of the lower portion of the magnetic flux inlet is about 1.5 or above and about 3 or below.

8. The motor of claim 6, wherein a ratio between a width of the magnet and the width of the upper portion of the magnetic flux inlet is about 0.5 or above and about 2 or below.

9. An apparatus for magnetizing magnets of a rotor, wherein the rotor comprises a plurality of cores that are radially disposed while interposing the magnets therebetween, the apparatus comprising:
a plurality of teeth disposed around two cores of the plurality of cores, the two cores laterally provided while interposing one of the magnets therebetween; and
a coil provided around the plurality of teeth to form a magnetic flux to magnetize the one magnet interposed between the two cores laterally provided.

10. The apparatus of claim 9, wherein the plurality of teeth comprise:
two main teeth that extend from a body of the magnetizing apparatus toward a center of the rotor, to which the plurality of cores are directed, the two main teeth being disposed to be adjacent to outer circumferences of the two cores, respectively; and
first and second coils wound around each of the two main teeth, respectively, the first coil flowing electric current in a first direction and the second coil flowing electric current in a second opposite direction, respectively.

11. The apparatus of claim 10, wherein the plurality of teeth further comprise subsidiary teeth provided on outer sides of the two main teeth to prevent a magnetic influence from being applied to other magnets disposed on both sides of the one magnet, which is disposed between the two cores.

12. The apparatus of claim 11, further comprising a connection part configured to connect at least two magnetizing apparatuses to each other such that the at least two magnetizing apparatuses are disposed on an outer side of the rotor in a form of a ring.

13. The apparatus of claim 9, wherein the plurality of teeth comprise:
two main teeth disposed to be adjacent to upper surfaces of the two cores, respectively, or on lower surfaces of the two cores, respectively;
a winding part configured to connect the two main teeth to each other; and
a coil wound on the winding part.

14. The apparatus of claim 12, further comprising:
a winding part provided on the body such that a magnetic flux is formed at the magnet in a direction identical to a direction of a magnetic flux formed when an electric current flows through a coil wound around the main teeth; and
a coil wound around the winding part.

15. A method of magnetizing magnets of a rotor, wherein the rotor comprises a plurality of cores that are radially disposed while interposing the magnets therebetween, the method comprising:
preparing a magnetizing apparatus comprising a plurality of magnetizing teeth and coils wound around the plurality of magnetizing teeth ;
disposing the magnetizing apparatus such that the plurality of magnetizing teeth are disposed to be adjacent to outer circumferential surface of two cores of the plurality of cores, the two cores being disposed laterally while interposing one of the magnets therebetween;
flowing electric current through the coil such that a closed-loop path of a magnetic flux is formed among the plurality of magnetizing teeth, the two cores and the one magnet provided between the two cores.
